# EUROPEAN PATENT SPECIFICATION

(11) **EP 0 819 774 B1**
(45) Date of publication and mention of the grant of the patent: **12.09.2001**
(21) Application number: 97304825.9
(22) Date of filing: 02.07.1997
(51) Int. Cl.: C22C 18/00, H01M 4/42

(54) **Silver-alloyed or silver-titanium-alloyed zinc anode can for manganese dry battery**
Anodenbecher aus Ag-Zn oder Ag-Zn-Ti Legierung für Mangantrockenbatterie
Pile sèche à base de manganèse avec godet en alliage de Zn-Ag ou Zn-Ag-Ti

(30) Priority: 19.07.1996 JP 20759596
(43) Date of publication of application: 21.01.1998
(73) Proprietor: MATSUSHITA ELECTRIC INDUSTRIAL CO., LTD., Kadoma-shi, Osaka (JP)
(72) Inventor: Murakami, Hajime, 1006, Oaza Kadoma, Kadoma-shi, Osaka (JP); Ashihara, Rhohei, 1006, Oaza Kadoma, Kadoma-shi, Osaka (JP); Kubota, Kohei, 1333-2 Haraichi, Ageo-shi, Saitama (JP); Sato, Koichi, 1333-2 Haraichi, Ageo-shi, Saitama (JP)
(74) Representative: Thomson, Paul Anthony

(56) References cited:
- EP-A- 0 688 056
- US-A- 4 994 333
- PATENT ABSTRACTS OF JAPAN vol. 095, no. 007, 31 August 1995 & JP 07 094194 A (TOSHIBA BATTERY CO LTD), 7 April 1995,
- PATENT ABSTRACTS OF JAPAN vol. 095, no. 009, 31 October 1995 & JP 07 153449 A (FUJI ELELCTROCHEM CO LTD), 16 June 1995,
- PATENT ABSTRACTS OF JAPAN vol. 016, no. 528 (C-1001), 29 October 1992 & JP 04 198441 A (TOSHIBA BATTERY CO LTD), 17 July 1992,

## Description

### BACKGROUND OF THE INVENTION

### 1. Field of the Invention

The present invention relates generally to a manganese dry battery, and more specifically to a manganese dry battery which does not contain heavy metals such as mercury, cadmium and lead.

### 2. Prior Art

Heretofore, 0.3 - 0.5 wt% of lead has generally been added to zinc alloys which form an anode zinc can of a manganese dry battery, in order to enhance its workability and mechanical strength which are necessary in manufacturing process of anode zinc cans which are components of the manganese dry battery and to suppress possible corrosion (self-consumption of the battery) of the anode zinc can during storing of the dry battery configured with the anode zinc can.

The content of lead in the zinc alloy is a little amount. However, as the distribution and consumption of the batteries have been increased, environmental pollution due to the lead remaining in waste manganese dry batteries, as well as mercury or cadmium has recently become a serious social concern. Therefore, reduction of the amount of lead to be added to the zinc alloy composition, or production of the dry battery without adding any lead is of urgent necessity.

However, as already well known, the proposed reduction or complete exclusion of lead from the anode zinc alloy, not only greatly deteriorates the workability and the mechanical strength which are necessary in manufacturing process of the anode zinc can, but also invites corrosion of the anode zinc can.

Of these unsolved problems, as a means for solving the corrosion of the zinc can, it is already known to use a zinc alloy added with manganese, indium, bismuth or the like as the anode powder for configuring an alkaline-manganese dry battery (Japanese Patent Publication (Kokoku) No.Sho 50-11576, Japanese Patent Publication (Kokai) Nos.Sho 61-153950 and Sho 63-67499).

However, when a zinc alloy is produced by adding these metals of indium, bismuth or the like so as to obtain the corrosion resistant property , the workability of the alloy tends to decrease with the decrease in the added amount of lead, as compared with an anode zinc can made of the prior art zinc alloy added solely with lead.

As a method of solving these problems. titanium addition to a zinc alloy has been reported (ILZRO Alloys For Zinc Dry Cells 1978 Semi-Annual Report, Japanese Patent Application Laid-Open Gazette No. Hei 7-94194 and Japanese Patent Application Laid-Open Gazette No. Hei 7-153449). This addition of titanium to the zinc alloy improves properties, such as the workability, mechanical strength and the like of the zinc can. However, the zinc alloy is deteriorated in its corrosion resistant property and in its discharge performance with an increase in the added amount of titanium more than a required amount. Further, the titanium addition method can cause a pit-shaped corrosion to occur or cause a working failure of the zinc alloy to occur in manufacturing an anode zinc can.

JP-A-7,094,194 discloses lead-free zinc alloys for anode cans for magnesium dry batteries. These alloys contain 30-800 ppm of Bi and additionally one or more of Ag and Ti.

### SUMMARY OF THE INVENTION

Accordingly, the object of the present invention is to provide a manganese dry battery free from lead, which has an improved storage characteristic, in order to solve the above-mentioned problems. The manganese dry battery of the present invention is configured with an anode zinc can which has a workability, a mechanical strength and a corrosion resistant property equivalent to or greater than those of the prior art anode zinc can containing lead.

The present invention provides a manganese dry battery comprising manganese dioxide as a cathode active material, an anode zinc can and a separator, wherein the anode zinc can is made of a zinc alloy free from lead and containing 0.003 - 0.3 wt% of silver, and 0.0005 - 0.2 wt% of titanium, and contains at least one member selected from the group consisting of 0.015 wt% or less of indium and 0.015 wt % or less of bismuth, and titanium is allowed to be contained by using a zinc-titanium mother alloy which does not contain intermetallic compounds of Zn₂Ti, ZnTi and ZnTi₂, and a metallic titanium phase.

Preferably, the zinc alloy contains 0.005 - 0.1 wt % of silver and 0.001 - 0. 1 wt % of titanium.

In the above-mentioned manganese dry battery, if the content of silver in the anode zinc can is less than 0.003 wt %, the mechanical strength and corrosion resistant properties thereof are decreased. If the content of silver in the anode zinc can is more than 0.3 wt %, the corrosion resistant property thereof can is decreased. Titanium enhances the workability and mechanical strength of the anode zinc can. If the content of titanium in the anode zinc can is less than 0.0005 wt %, the workability and mechanical strength thereof cannot be enhanced. If. the content of titanium in the anode zinc can is more than 0.3 wt%, the mechanical strength thereof can be enhanced, but the corrosion resistant property thereof is decreased.

In the above-mentioned manganese dry battery, titanium is allowed to be contained by using a zinc-titanium mother alloy which does not contain an intermetallic compound of Zn₂Ti, ZnTi and ZnTi₂ and a metallic titanium phase in preparing the zinc alloy.

As a method of allowing titanium to be contained in the zinc alloy, the present inventors have variously studied methods of producing a zinc-titanium alloy. As a result, the present inventors have found that titanium can be allowed to contain in a zinc alloy, by using a zinc-titanium mother alloy which does not contain an intermetallic compound of Zn₂Ti, ZnTi and ZnTi₂ and a metallic titanium phase. The zinc-titanium mother alloy is produced by employing sponge titanium as the raw material of titanium, and a production condition of a zinc-titanium mother alloy, in which 0.001 to 5 wt% of titanium is added, a melting temperature is of 500 to 750 °C and a melting time is of 0.5 to 6 hours.

In the above-mentioned manganese dry battery, not more than 0.015 wt%, preferably not more than 0.003 wt%, of indium and/or not more than 0.015 wt%, preferably not more than 0.003 wt%, of bismuth are allowed to be contained in the zinc alloy.

If the contents of indium and bismuth in the anode zinc can are more than 0.015 wt%, respectively, the workability and corrosion resistant properties in manufacturing the anode zinc can are decreased.

### BRIEF DESCRIPTION OF THE DRAWING

Fig. 1 is a longitudinal cross-sectional view showing an example of a cylindrical manganese dry battery built in accordance with the present invention.

Fig. 2 is a perspective view schematically illustrating a method for measuring the mechanical strength of the anode zinc can employed in configuring the manganese dry battery in accordance with an embodiment of the present invention.

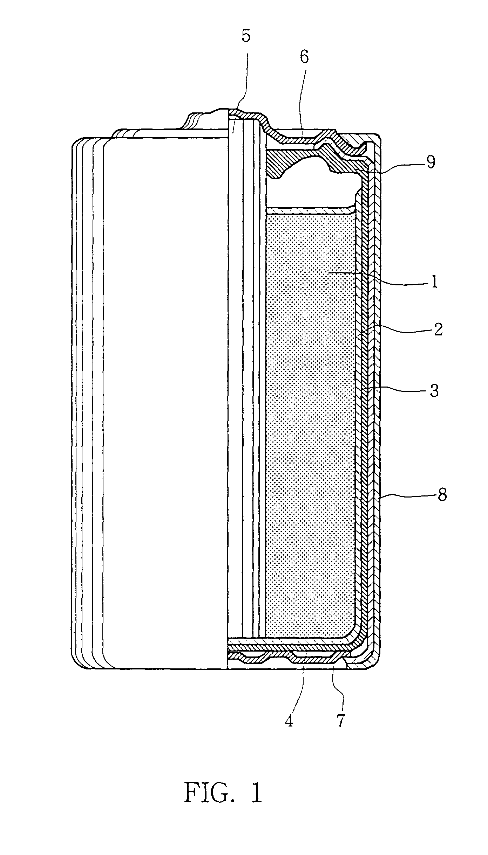

In Fig. 1, 1 is a cathode mixture, 2 is a separator, 3 is an anode zinc can, 4 is a bottom insulator paper, 5 is a carbon rod, 6 is a sealing plate, 7 is a bottom plate, 8 is an outer jacket and 9 is a sealing member, respectively.

By employing an anode zinc can according to Examples 1 to 8, it is possible to obtain a workability and a mechanical strength equivalent to or larger than those obtained with a prior art anode zinc can containing lead. Further, as to a corrosion-resistant property of the zinc alloy, the same effect can also be obtained. This reason seems to be as follows. That is, by allowing silver to contain in a zinc alloy at a specific range thereof, the corrosion resistant property of the zinc alloy can be improved, and hardness can also be obtained at a level equivalent to that of the prior art anode can containing lead, due to the very small amount of added silver. As a result the workability and the mechanical strength of the anode zinc can can be enhanced.

By employing an anode zinc can according to the present invention according to Examples 9 to 34, while allowing silver to be contained in a zinc alloy at a specific combined range of the silver and titanium content, the corrosion resistant property of the zinc alloy can be improved, and the zinc particles are fined to obtain a dense structure. As a result, the workability and the mechanical strength of the anode zinc can can be enhanced, and the corrosion-resistant property of the zinc alloy also can be enhanced.

Further, by employing an anode zinc can according to the present invention, a harmful compound of a high titanium ratio and/or harmful metal titanium is not contained. Whilst such compound or metal titanium is contained in the zinc alloy, the amount thereof is very small and the size thereof is also very small so that it does not become harmful in manufacturing the anode zinc can.

Furthermore, even allowing titanium to be included according to the present invention, a harmful compound of a high titanium ratio and/or harmful metal titanium is not contained. The amount of such compound or metal titanium contained in the obtained zinc-titanium mother alloy is very small and the size thereof is also very small so that it does not become harmful in manufacturing the anode zinc can.

Particularly, if the indium content is 0.01 wt% or more, and/or the bismuth content is 0.001 wt% or more, even if 0.01 wt% or more of titanium is added to the zinc-titanium mother alloy, a crack occurs at a side surface of the rolled piece in a rolling process. However, the mother alloy produced under the manufacturing conditions for the usual zinc-titanium mother alloy contains harmful Zn₂Ti, ZnTi and ZnTi₂ and metal titanium phase, which become harmful in manufacturing the anode zinc can so that a perforated can is produced. Therefore, a zinc-titanium mother alloy which does not contain an intermetallic compound, such as Zn₂Ti, ZnTi and ZnTi₂ and metal titanium phase is used in the present invention.

Further, as described in the present invention, by adding indium and/or bismuth to the zinc alloy, the suppressive effect on the hydrogen gas generation can be significantly improved.

As described previously and apparent from the following disclosure, in accordance with the present invention, it is possible to obtain a useful manganese dry battery.

In the following paragraphs, the present invention will be described in more detail by way of Examples 26 to 34 with reference to the accompanying drawings, Examples 1 to 25 not being in accordance with the invention and only being included by way of information.

### Examples 1 to 34 and Comparative Examples 1 to 10

First, each of molten zinc alloys was prepared by melting a zinc ingot having a purity of 99.99% at about 500°C and adding each of the elements in a predetermined amount to have the respective alloy compositions listed in Tables 1 - 2 below.

A sample of a comparative example 10 in table 2 represents a zinc alloy for the anode can containing 0.4 wt% of lead, which has conventionally been used in general.

Subsequently, each of these molten zinc alloys was rolled into a plate of a predetermined thickness while cooling. After being rolled, rolling ductility of each alloy sample was evaluated by observing its surface. After that, each of the rolled plates having the respective composition was punched into a test piece of circular or hexagonal shape. Thereafter, each of these test pieces was molded into a zinc anode can for the manganese dry battery by means of impact molding process.

In order to evaluate and compare the mechanical strength of the anode zinc can thus prepared, measurements of the mechanical strength were performed on the anode cans having the respective zinc alloy compositions as follows.

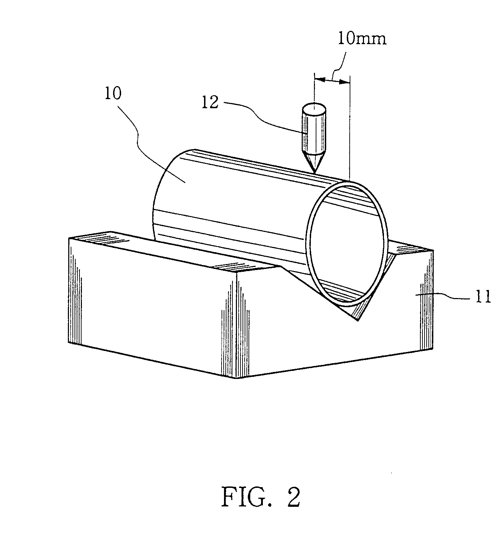

In the measurement which is schematically illustrated in Fig. 2, an anode zinc can 10 was placed on a V-shaped block 11, and a conical pressure punch 12 was applied with a pressing force in a vertical at a spot 10 mm apart from the open end of the anode zinc can 10. Displacement of the zinc can in the direction of the pressing force (in the vertical direction) and a load at the spot where the conical pressure punch was applied were recorded on a recorder.

Based on the fact that the load reached an approximately constant value at about 4 mm of displacement in an anode zinc can having a size of R20 (D cell), a load corresponding to the displacement of 4 mm was defined as the mechanical strength of the anode zinc can for convenience sake.

Next, in order to evaluate the effect of the element added to the zinc alloy composition for preventing corrosion of the alloy, a test of hydrogen gas generation in an electrolyte was conducted on each of the samples of the anode zinc can having the respective compositions. In the test, each of the test pieces of the anode zinc cans cut to have a predetermined weight was immersed in 5 ml of an electrolyte containing 30 wt% of zinc chloride and 1.9 wt% of ammonium chloride at 45°C, and the amount of the generated hydrogen gas was measured.

The evaluations of rolling ductilities of the zinc alloys having the respective alloy compositions, mechanical strengths of the respective anode zinc cans and the amounts of generated hydrogen gas are summarized in Tables 1 and 2 below. In the tables, the rolling ductility is represented by the following symbols:
○ : Entirely preferably rolled piece
X : Crack development on both side faces of the rolled piece

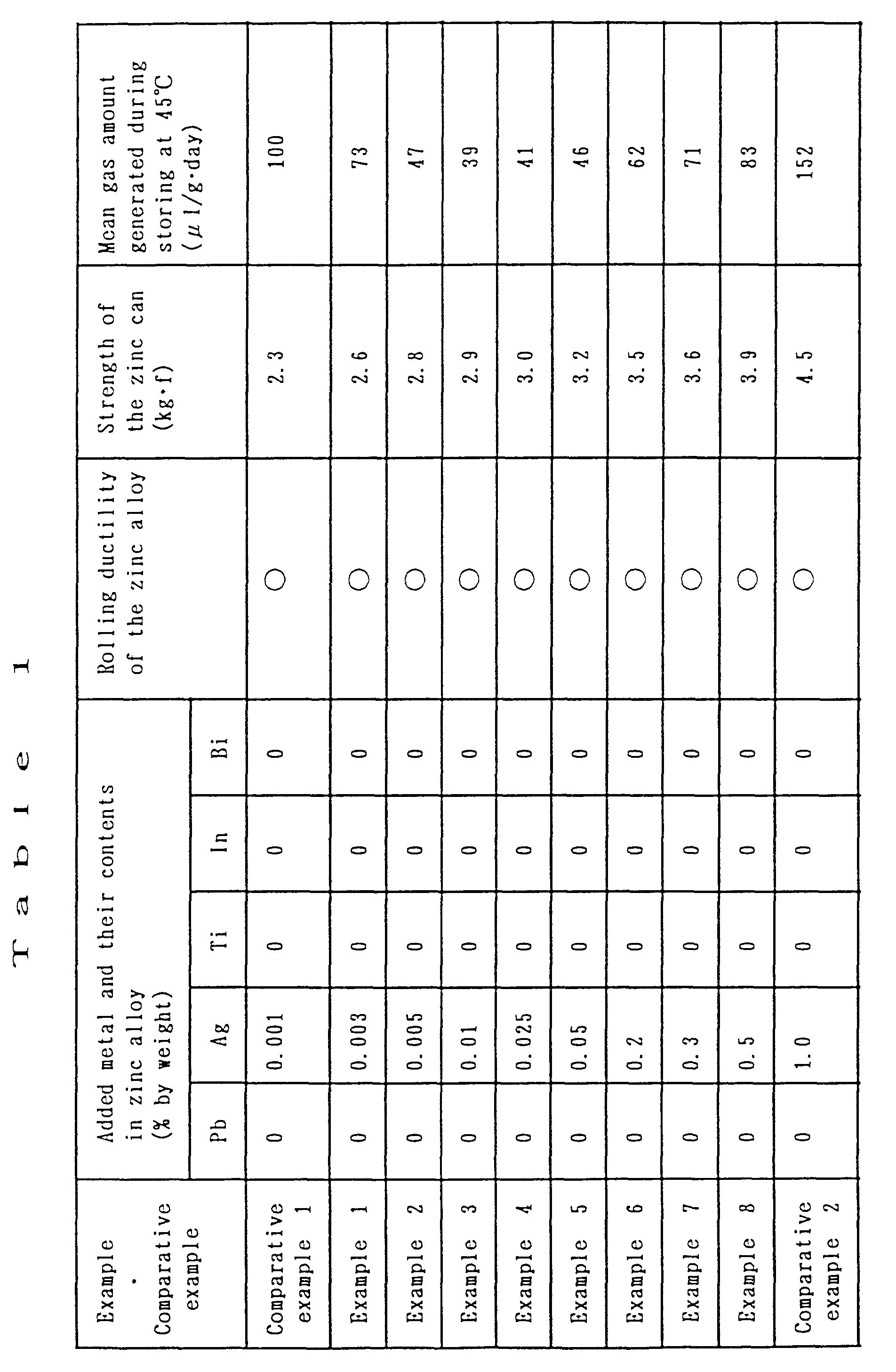

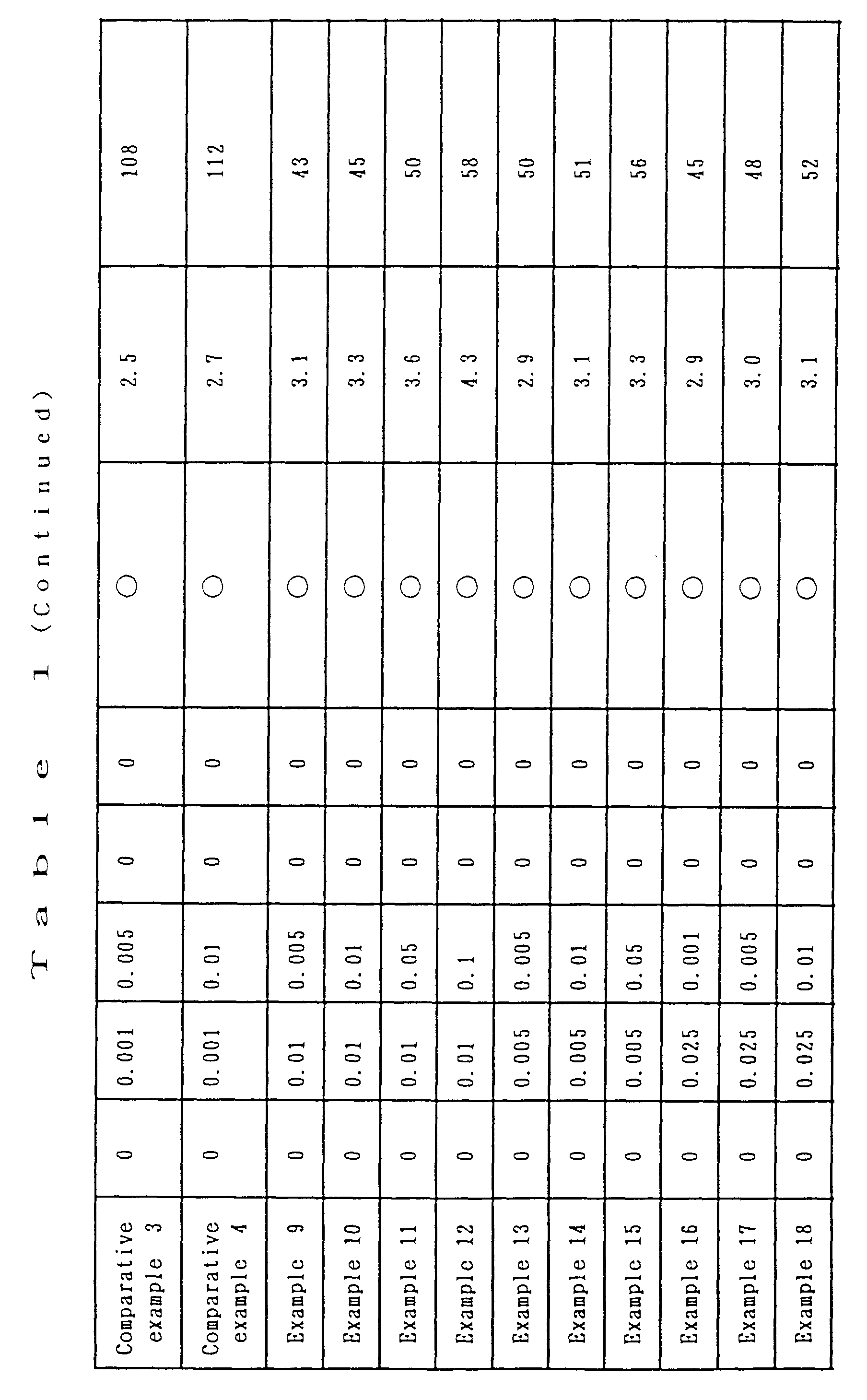

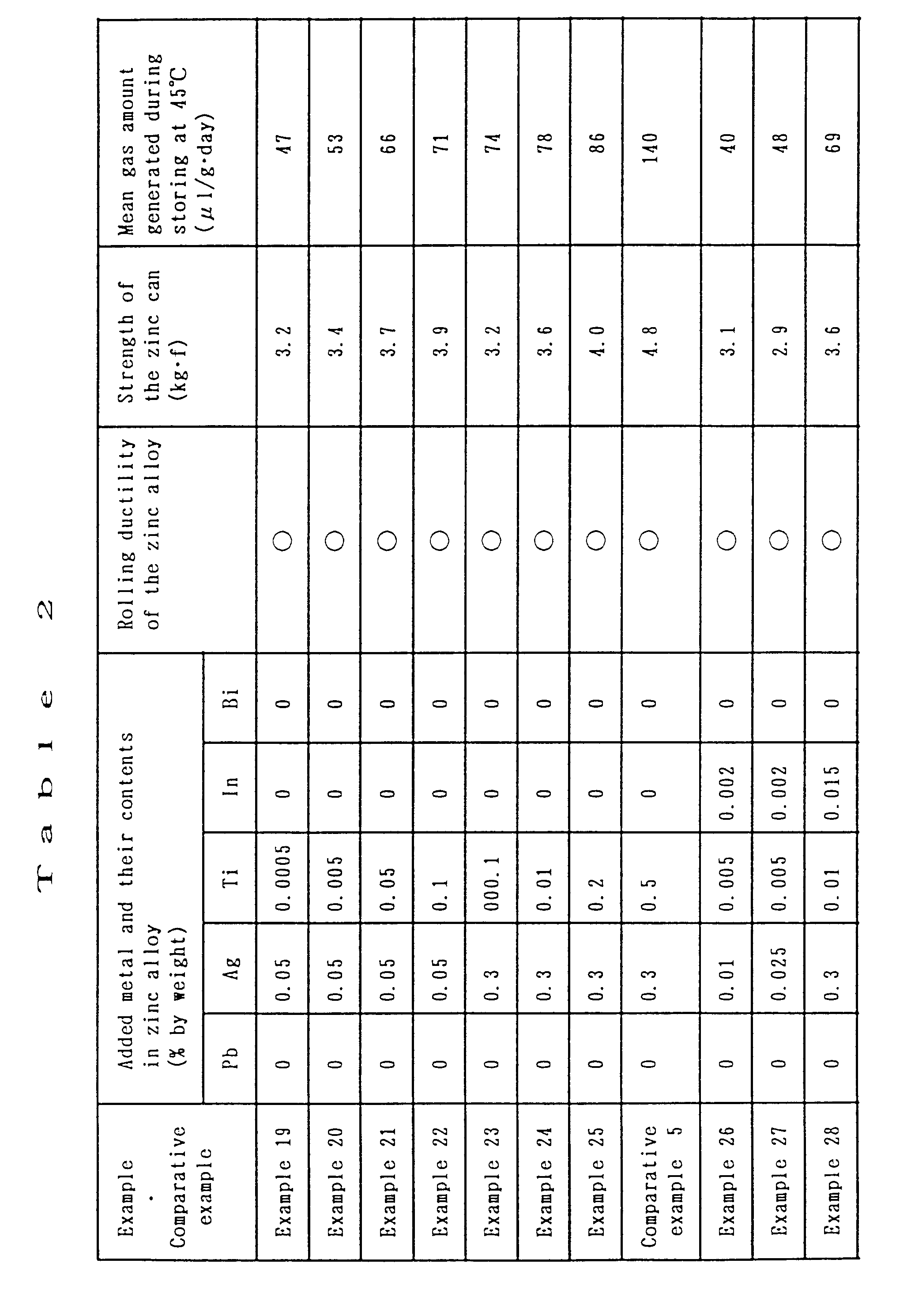

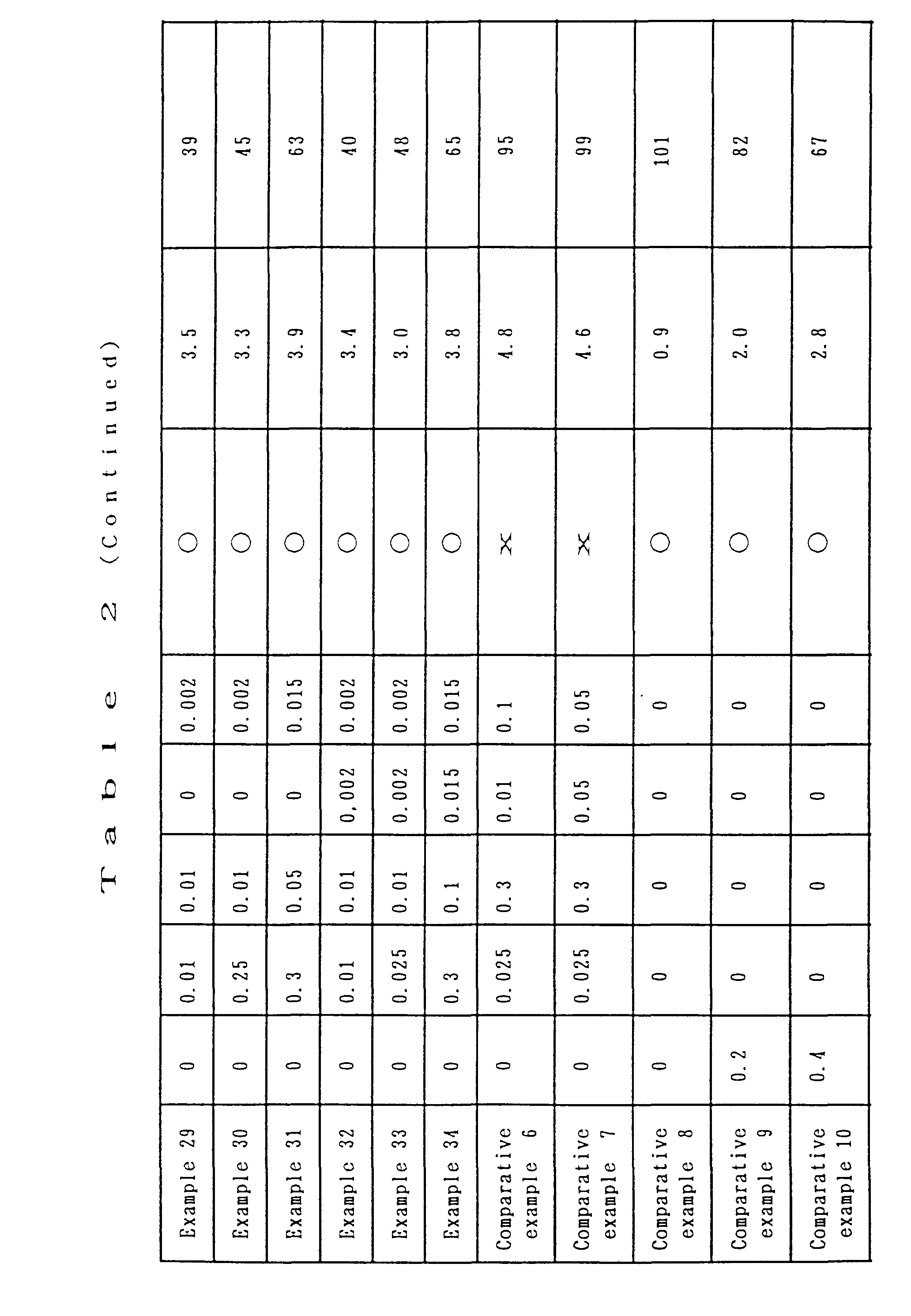

As clearly seen in the above-mentioned tables, it is appreciated that the respective zinc alloy samples of Example 1 through Example 8 have further improved effects on maintaining the improved mechanical strength and suppressing the generation of hydrogen gas than in a case of zinc or zinc alloy samples of Comparative Example 8 through 10.

Further, it is appreciated from the results of Example 9 through Example 25 that a zinc alloy containing titanium in addition to silver has a further improved mechanical strength than in a case of a zinc alloy containing silver which is solely present therein, while the amount of generated hydrogen gas in the former case tends to be further increased than the latter case where silver is solely present in a zinc alloy. Therefore, the content of the silver in the alloy composition should be in the above-mentioned ranges.

Each amount of generated hydrogen gas in anode zinc can samples of Comparative Examples 1 to 5 in which 0.003 - 0.5 wt% of solely present silver is contained for the Examples 1 and 2, 0.003 - 0.3 wt% of silver and 0.0005 to 0.3 wt% of titanium are contained for the Examples 3 and 4, and titanium outside the range of 0.0005 to 0.3 is contained for the Example 5, is larger than that of the prior art anode zinc can sample of a Comparative Example 10 containing 0.4 wt% of lead. Moreover, there arises another problem that a practical discharge performance of the dry battery configurated with the anode can cannot be maintained properly during storing because of generating hydrogen gas.

Further, as can be seen from the results of Example 26 through Example 34, when indium and/or bismuth are optionally contained, the suppressive effect on the hydrogen gas generation further becomes significant.

Based on these results, it is concluded that the contents of the respective elements in the alloy composition should be in the above-mentioned ranges; and if the contents are within the above-mentioned ranges, the workability and the mechanical strength of the zinc alloy can be maintained at the levels equivalent to or higher than those of the prior art anode zinc can containing 0.3 - 0.5 wt% of lead. Further, from the point of view of corrosion, the anode zinc can containing the respective elements in the above-stated ranges has a corrosion-preventive effect equivalent to or larger than that of the prior art anode zinc can.

### Experiment Examples

The production yields of zinc alloy can were compared between the alloy cans employing zinc-titanium alloys free from Zn₂Ti, ZnTi, ZnTi₂ and a metal titanium phase.

In the Experiment Examples, sponge titanium was employed as the raw material of titanium. Examples in which optimum ranges selected from 0.001 to 5 wt% of added titanium, melting temperatures of 500 to 750 °C and melting times of 0.5 to 6 hours were employed are respectively defined as a production process A. On the other hand, the Comparative Examples in which comparative ranges therefrom were employed are respectively defined as a production process B. The production processes A and B of zinc alloy cans will be described below.

### [Production Process A]

Each of zinc-titanium mother alloys was prepared by melting an electrolytic zinc ingot having a purity of 99.99 wt%, which is defined by the JIS H 2107, in a No. 30 graphite crucible using an electric furnace at about 650 °C, and adding a sponge titanium thereto to have a concentration of 2.0 wt%, and after melting the titanium-added metal for 4 hours, casting the molten metal into an ingot case of φ 10 x 500 mm.

### [Production Process B]

Each of zinc-titanium mother alloys was prepared by melting an electrolytic zinc ingot having a purity of 99.99 wt%, which is defined by the JIS H 2107, in a No. 30 graphite crucible using an electric furnace at about 750 °C, and adding a plate-shaped or button-shaped titanium thereto to have a concentration of 2.0 wt%, and after melting the titanium-added metal for 24 hours, casting the molten metal into an ingot case of φ 10 x 500 mm.

By applying each of the zinc-titanium mother alloys prepared by the above-mentioned production processes A and B, to Examples 10, 17, 22, 26, 29 and 34, the respective anode zinc cans for a D cell and an AA cell were produced, and the results of the production yields thereof are summarized Table 3.

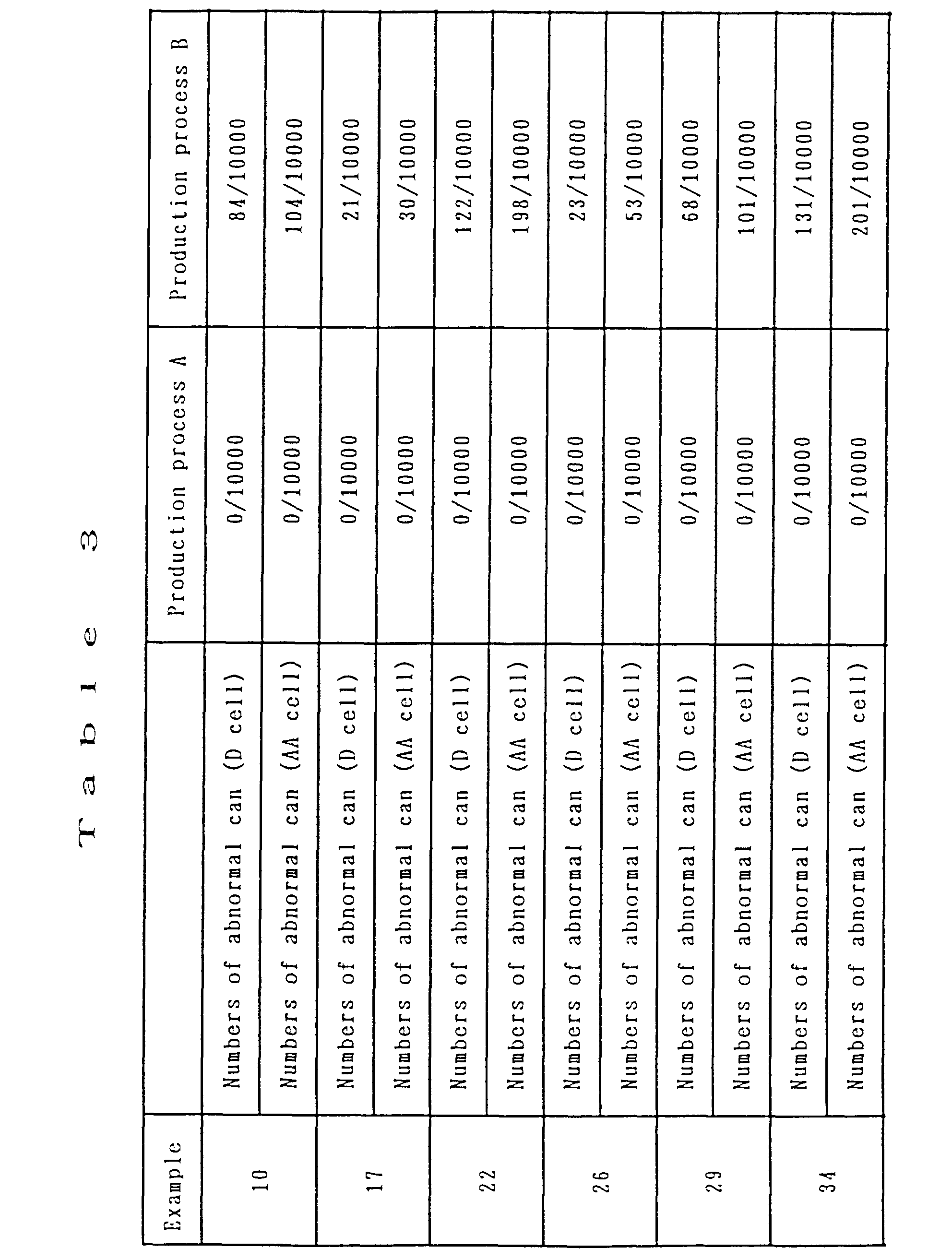

As can be seen from Table 3, in the respective Examples, the production process A is superior to the production process B.

This is because in the production process B, an intermetallic compound such as Zn₂Ti, ZnTi and ZnTi₂ and a metal titanium phase are formed as a hard and dense structure, and the portion of the structure has no the same elongation as other portion of the zinc alloy during manufacturing anode zinc cans so that a crack or the like is produced at the portion. Particularly, when a larger stress is applied to the alloy for an AA cell, the crack or the like significantly is produced.

As described above, in the anode zinc can according to the present invention, which is employed as a component of the manganese dry battery, the mechanical strength, which is necessary for manufacturing the battery, can be maintained at the levels equivalent to or higher than that of the prior art anode zinc can.
Further, the corrosion-resistant property in storing the battery can also be maintained at the levels equivalent to or higher than that of the prior art anode zinc can. As a result, according to the present invention, a useful manganese dry battery which has less risk for environmental pollution can be provided.

Although the present invention has been described in terms of presently preferred embodiments. it is to be understood that such disclosures are not to be interpreted as limiting. Various alterations and modifications will be no doubt become apparent to those skilled in the art to which the present invention pertains, after having read the above disclosure. Accordingly, it is intended that the appended claims be interpreted as covering all alterations and modifications as fall within thescope of the invention.

## Claims

1. A manganese dry battery comprising
manganese dioxide as a cathode active material, an anode zinc can and a separator, wherein the anode zinc can is made of a zinc alloy free from lead and containing 0.003 - 0.3 wt% of silver, and 0.0005 - 0.2 wt% of titanium, and contains at least one member selected from the group consisting of 0.015 wt% or less of indium and 0.015 wt% or less of bismuth, and titanium is allowed to be contained by using a zinc-titanium mother alloy which does not contain intermetallic compounds of Zn₂Ti, ZnTi and ZnTi₂, and a metallic titanium phase.

2. A manganese dry battery as claimed in claim 1, in which the zinc alloy contains 0.005 - 0.1 wt% of silver and 0.001 - 0.1 wt% titanium.

3. A manganese dry battery as claimed in claim 1 or 2, in which the zinc alloy contains not more than 0.003 wt% indium and/or not more than 0.003 wt% bismuth.

## Patentansprüche

1. Mangan-Trockenbatterie, umfassend
- Mangandioxid als Kathoden-Aktivmaterial,
- eine Zink-Anodenhülse sowie
- eine Trennschicht,
deren Zink-Anodenhülse aus einer Zinklegierung hergestellt ist, die Blei nicht enthält, die 0,003 - 0,3 Gew.-% Silber und 0,0005 - 0,2 Gew.-% Titan sowie mindestens ein Metall enthält, ausgewählt aus der Gruppe, umfassend 0,015 Gew.-% Indium oder weniger und 0,015 Gew.-% Wismut oder weniger, und bei der Titan dadurch enthalten sein kann, daß eine Zink/Titan-Mutterlegierung, die intermetallische Verbindungen von Zn₂Ti, ZnTi und ZnTi₂ nicht enthält, sowie eine metallische Titanphase verwendet wird.

2. Mangan-Trockenbatterie nach Anspruch 1, in der die Zinklegierung 0,005-0,1 Gew.-% Silber und 0,001 - 0,1 Gew.-% Titan enthält.

3. Mangan-Trockenbatterie nach Anspruch 1 oder 2, in der die Zinklegierung nicht mehr als 0,003 Gew.-% Indium und/oder nicht mehr als 0,003 Gew.-% Wismut enthält.

## Revendications

1. Batterie sèche au manganèse comprenant
du dioxyde de manganèse à titre de matériau actif de cathode, un boîtier en zinc formant anode et un séparateur, où le boîtier en zinc formant anode est fait d'un alliage de zinc exempt de plomb et contenant 0,003 à 0,3 % en poids d'argent, et 0,0005 à 0,2 % en poids de titane, et contient au moins un élément choisi dans l'ensemble constitué par 0,015 % en poids ou moins d'indium et 0,015 % en poids ou moins de bismuth, et il est permis que du titane soit contenu par utilisation d'un alliage maître de zinc-titane qui ne contient pas de composés intermétalliques Zn₂Ti, ZnTi et ZnTi₂, et une phase de titane métallique.

2. Batterie sèche au manganèse selon la revendication 1, dans laquelle l'alliage de zinc contient 0,005 à 0,1 % en poids d'argent et 0,001 à 0,1 % en poids de titane.

3. Batterie sèche au manganèse selon la revendication 1 ou 2, dans laquelle l'alliage de zinc ne contient pas plus de 0,003 % en poids d'indium et/ou pas plus de 0,003 % en poids de bismuth.
